(19) Europäisches Patentamt
European Patent Office
Office européen des brevets

(11) Veröffentlichungsnummer: **0 017 001**
**B1**

# (12) EUROPÄISCHE PATENTSCHRIFT

(45) Veröffentlichungstag der Patentschrift: **28.04.82**

(21) Anmeldenummer: **80101159.4**

(22) Anmeldetag: **07.03.80**

(51) Int. Cl.³: **A 01 N 25/04**, A 01 N 43/58, A 01 N 47/12, A 01 N 47/18 // (A01N43/58, 37/22, 33/18),(A01N47/12, 43/58),(A01N47/18, 43/58)

(54) **Herbizide in Form einer wässrigen Suspension, die Mischungen aus einem Pyridazon und einem Thiolcarbamat, einem Chloracetanilid oder einem Dinitroanilin enthalten, sowie ein Verfahren zu ihrer Herstellung und ihre Verwendung zur Bekämpfung unerwünschten Pflanzenwuchses.**

(30) Priorität: **08.03.79 DE 2909158**

(43) Veröffentlichungstag der Anmeldung: **15.10.80 (Patentblatt 80/21)**

(45) Bekanntmachung des Hinweises auf die Patenterteilung: **28.04.82 Patentblatt 82/17**

(84) Benannte Vertragsstaaten: **AT BE CH DE FR GB IT LU NL SE**

(56) Entgegenhaltungen:
**DE - A - 1 921 464**
**DE - A - 2 547 968**
**FR - A - 2 235 645**
**FR - A - 2 247 163**
**FR - A - 2 263 691**
**US - A - 3 862 832**

(73) Patentinhaber: **BASF Aktiengesellschaft**
**Carl-Bosch-Strasse 38**
**D-6700 Ludwigshafen (DE)**

(72) Erfinder: **Kleuser, Dieter, Dr.**
**Pierstrasse 4**
**D-6710 Frankenthal (DE)**
Erfinder: **Wigger, August, Dr.**
**Rehbachstrasse 22**
**D-6701 Neuhofen (DE)**

**EP 0 017 001 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# Herbizide in Form einer wäßrigen Suspension, die Mischungen aus einem Pyridazon und einem Thiolcarbamat, einem Chloracetanilid oder einem Dinitroanilin enthalten, sowie ein Verfahren zu ihrer Herstellung und ihre Verwendung zur Bekämpfung unerwünschten Pflanzenwuchses

Die vorliegende Erfindung betrifft Herbizide in Form stabiler wäßriger Suspensionen, die eine Wirkstoffmischung aus 1-Phenyl-4-amino-5-chlor-pyridazon-(6) oder 1-Phenyl-4-amino-5-brom-pyridazon-(6) und einem Thiolcarbamat oder einem Chloracetanilid oder einem 2,6-Dinitroanilin enthalten.

Es ist bekannt, daß 1-Phenyl-4-amino-5-chlor-pyridazon-(6) bzw. 1-Phenyl-4-amino-5-brom-pyridazon-(6), Thiolcarbamate, Chloracetanilide und 2,6-Dinitroaniline herbizid wirksam sind (DE-A-1 105 232, US-A-3 330 821, US-A-3 185 720, DE-A-2 328 340, DE-A-2 241 408) und daß Pyridazone zur Erzielung einer stärkeren herbiziden Wirkung zusammen mit Wirkstoffen aus der Klasse der Thiolcarbamate, der 2,6-Dinitroaniline und der Säureanilide ausgebracht werden können (US-A-3 862 832 ; FR-A-2 235 645 ; FR-A-2 235 645 ; DE-A-1 921 464).

Außerdem ist bekannt, daß man ein Herbizid in Form einer stabilen wäßrigen Suspension erhält, wenn man 20 bis 50 Gewichtsprozent 1-Phenyl-4-amino-5-chlor-pyridazon-(6) oder 1-Phenyl-4-amino-5-brom-pyridazon-(6) zusammen mit Wasser, 2 bis 10 Gewichtsprozent Dispergiermittel, 0,5 bis 5 Gewichtsprozent Kieselsäure, 0,5 bis 5 Gewichtsprozent eines Blockpolymerisats aus Propylenglykol, Propylenoxid und Äthylenoxid fein vermahlt (DE-A-2 547 968).

Sollen zur Verbreiterung des Wirkungsspektrums Mischungen von herbiziden Wirkstoffen, beispielsweise aus Pyridazonen und Thiolcarbamaten, Chloracetaniliden oder 2,6-Dinitroanilinen, ausgebracht werden, so verwendet man bei der Applikation eine Tankmischung oder eine Fertigformulierung.

Eine Tankmischung ist die auf eine bestimmte Anwendungskonzentration gebrachte wäßrige Verdünnunng aus den beiden Formulierungen der einzelnen Wirkstoffe, die als Emulsionskonzentrat, als Suspensionskonzentrat (Flowable) oder als Spritzpulver (Wettable Powder) formuliert vorliegen können. Bei solchen Tankmischungen bereitet die Mischverträglichkeit der einzusetzenden Formulierungen häufig Schwierigkeiten. Da die Formulierungsart durch die chemischphysikalischen Eigenschaften eines Wirkstoffes vorgegeben ist, bedingt sie die Auswahl der Lösungsmittel und des Hilfsstoffsystems, wie Emulgatoren, Dispergiermittel, Netzmittel. Bei zwei unterschiedlichen und selbst bei gleichen Formulierungsarten kann es deshalb zu Unverträglichkeiten in der Tankmischung kommen. Die Folgen sind u.a. Aufrahmung, Koagulation, Aggregation, die es unmöglich machen, die Mischung auszubringen.

Bei der Fertigformulierung geht man dagegen von einer Formulierung mit mindestens zwei Wirkstoffen aus, die zusammen, als Emulsionskonzentrat, als Suspensionskonzentrat (Flowable) oder als Spritzpulver (Wettable Powder) formuliert, vorliegen können. Diese Formulierungen können durch Verdünnung mit Wasser direkt in Spritzbrühen mit entsprechender Anwendungskonzentration überführt werden. Dabei ist prinzipiell jede Kombination von Wirkstoffarten möglich. Die Formulierung zweier oder mehrerer Wirkstoffe nach einer Formulierungsart wird jedoch durch Unterschiede beispielsweise in den Löslichkeiten, den Schmelzpunkten, den spezifischen Gewichten sowie in der Stabilität erheblich beeinflußt bzw. unmöglich gemacht. Eine weitere Schwierigkeit liegt darin, ein geeignetes, einheitliches Hilfsstoffsystem, wie Emulgatoren, Netzmittel oder Dispergiermittel für die einzusetzenden Wirkstoffe zu finden. Dies gilt insbesondere für die Mischung aus festen und flüssigen Wirkstoffen.

Es wurde nun gefunden, daß Herbizide auf der Grundlage einer wäßrigen Suspension, enthaltend 20 bis 50 Gewichtsprozent 1-Phenyl-4-amino-5-chlor-pyridazon-(6) oder 1-Phenyl-4-amino-5-brom-pyridazon-(6), 2 bis 10 Gewichtsprozent Dispergiermittel, 0,5 bis 5 Gewichtsprozent Kieselsäure und 0,5 bis 5 Gewichtsprozent eines Blockpolymerisats aus Propylenglykol, Propylenoxid und Äthylenoxid, die zusätzlich ein Thiolcarbamat der Formel I

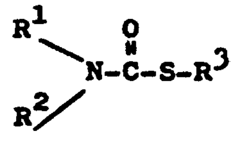

(I)

in der

$R^1$ einen Alkylrest mit bis zu 4 Kohlenstoffatomen,

$R^2$ einen Alkylrest mit bis zu 4 Kohlenstoffatomen oder den Cyclohexylrest und

$R^3$ einen Alkylrest mit bis zu 4 Kohlenstoffatomen, den 2,3-Dichlorallyl- oder den 2,3,3-Trichlorallylrest

bedeuten,

oder ein Chloracetanilid der Formel II

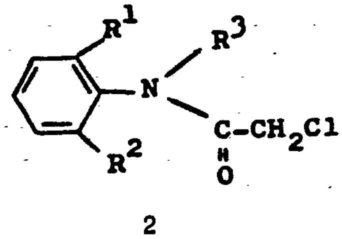

(II)

in der
$R^1$ und $R^2$ Methyl oder Äthyl und
$R^3$ einen Alkylrest mit bis zu 3 Kohlenstoffatomen oder einen Alkoxyalkylrest mit bis zu 4 Kohlenstoffatomen
bedeuten,
oder ein 2,6-Dinitroanilin der Formel III

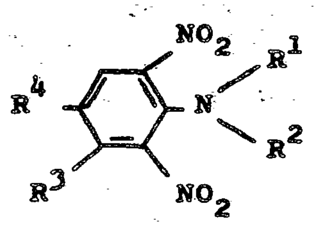

(III)

in der
$R^1$ Wasserstoff oder einen Alkylrest mit bis zu 5 Kohlenstoffatomen,
$R^2$ einen Alkylrest mit bis zu 5 Kohlenstoffatomen und
$R^3$ und $R^4$ einen gegebenenfalls durch Halogen substituierten Alkylrest mit bis zu 2 Kohlenstoffatomen bedeuten,
enthalten, wobei das Gewichtsverhältnis Pyridazon : Thiolcarbamat, Chloracetanilid oder Dinitroanilin 4 : 1 bis 1 : 2 beträgt, eine stabile Formulierung darstellen.

Es war keineswegs zu erwarten, daß man beim Zusatz der Thiolcarbamate, der Chloracetanilide oder 2,6-Dinitroaniline der Formeln I, II bzw. III zu dem wäßrigen Suspensionskonzentrat, das das Pyridazon enthält, ohne weitere Zugabe von Hilfsstoffen, wie Emulgatoren oder Netzmittel, eine stabile Formulierung erhält, da bekannt ist, daß wasserunlösliche Substanzen der genannten Wirkstoffklassen mit Wasser keine stabilen Dispersionen oder Emulsionen bilden.

Besonders überraschend ist, daß durch Verdünnen der erfindungsgemäßen konzentrierten Formulierung mit Wasser auf Anwendungskonzentration, wobei 5 bis 10 l der Formulierung mit 50 bis 600 l Wasser verdünnt werden, ebenfalls stabile Spritzbrühen entstehen. Diese sind beispielsweise nicht herstellbar, wenn man zu einer verdünnten Spritzbrühe aus 6 l eines Präparates gemäß Beispiel 1 der DE-OS 25 47 968 und 50 bis 600 l Wasser ein Thiolcarbamat, ein Chloracetanilid oder ein 2,6-Dinitroanilin der Formeln I, II bzw. III in dem oben erwähnten Gewichtsverhältnis der Wirkstoffe zusetzt. Es kommt in diesem Fall sofort zu einer Abscheidung der zugegebenen wasserunlöslichen Verbindung. Erst die intensive Inkorporierung des Thiolcarbamats, des Chloracetanilids oder des Dinitroanilins in ein Präparat gemäß Beispiel 1 der DE-OS 25 47 968 führt zu einem stabilen konzentrierten Mehrphasensystem, das auch bei weiterer Verdünnung mit Wasser auf Anwendungskonzentration stabil bleibt und aus dem sich das zugesetzte Thiolcarbamat, Chloracetanilid oder Dinitroanilin nicht abscheiden.

Geeignete herbizide Thiolcarbamate der Formel I sind beispielsweise N,N-Diisopropyl-thiolcarbaminsäure-2,3-dichlorallylester, N,N-Diisopropylthiolcarbaminsäure-2,3,3-trichlorallylester N-Äthyl-N-cyclohexyl-thiolcarbaminsäure-äthylester, N,N-Di-n-propyl-thiolcarbaminsäure-äthylester. Als Chloracetanilide der Formel II kommen beispielsweise 2-Äthyl-6-methyl-N-(1-methyl-2-methoxyäthyl)-chloracetanilid, 2,6-Diäthyl-N-methoxymethyl-chloracetanilid und als 2,6-Dinitroaniline der Formel III 2,6-Dinitro-3,4-dimethyl-N-(1-äthyl-n-propyl)-anilin, 2,6-Dinitro-4-trifluormethyl-N,N-di-n-propylanilin in Betracht.

Zur Herstellung der erfindungsgemäßen Herbizide bereitet man zunächst durch Vermahlen in einer Mühle, z.B. in einer Sand- oder Perlmühle, eine wäßrige Suspension, die 20 bis 50 Gewichtsprozent 1-Phenyl-4-amino-5-chlor-pyridazon-(6) oder 1-Phenyl-4-amino-5-brom-pyridazon-(6), 2 bis 10 Gewichtsprozent Dispergiermittel, 0,5 bis 5 Gewichtsprozent Kieselsäure und 0,5 bis 5 Gewichtsprozent eines Blockpolymerisats aus Propylenglykol, Propylenoxid und Äthylenoxid enthält. Zu diesem Suspensionskonzentrat gibt man unter intensivem Rühren den zweiten herbiziden Wirkstoff hinzu und erhält so eine stabile Formulierung. Die Menge des zweiten herbiziden Wirkstoffs wird dabei so gewählt, daß das Gewichtsverhältnis Pyridazon : Thiolcarbamat bzw. Chloracetanilid bzw. 2,6-Dinitroanilin 4 : 1 bis 1 : 2 beträgt.

Als Dispergiermittel können alle als Hilfsmittel zur Formulierung von Pflanzenschutzmitteln üblichen oberflächenaktiven Stoffe verwendet werden. Bevorzugtes Dispergiermittel ist das Natriumsalz eines Kondensationsproduktes aus Phenolsulfonsäure, Harnstoff und Formaldehyd. Solche Kondensationsprodukte werden beispielsweise in der DE-PS 1 113 457 und der DE-PS 1 178 081 beschrieben.

Unter Blockpolymerisat wird ein Produkt verstanden, das durch Umsetzung von Propylenglykol mit zunächst Propylenoxid und dann mit Äthylenoxid entsteht. Bevorzugt wird ein Produkt mit einem Polypropylenoxidkern mit einem Molekulargewicht von 3 000 bis 3 500 und einem Äthylenoxidgehalt von 50 %, so daß sein Gesamtmolekulargewicht bei etwa 6 000 bis 7 000 liegt.

Als Kieselsäure wird vorzugsweise synthetische Kieselsäure, d.h. Kieselsäure, die durch Fällung auf chemischem Wege hergestellt wurde, verwendet. Als Wasser verwendet man vorzugsweise vollentsalztes Wasser.

Außer Pyridazon, Dispergiermittel, Blockpolymerisat und Kieselsäure kann das Suspensionskonzentrat, das als Grundlage zur Herstellung der erfindungsgemäßen Herbizide dient, gegebenenfalls noch 5 bis 15 Gewichtsprozent Antifrostmittel enthalten. Geeignet sind beispielsweise Äthylenglykol, Propylenglykol, Glycerin oder Harnstoff. Vorzugsweise verwendet man Äthylenglykol.

Sind das Thiolcarbamat bzw. das Chloracetanilid oder das Dinitroanilin unter Normalbedingungen fest, so empfiehlt es sich, diese vor dem Zumischen in einem Alkylbenzol zu lösen, um die Stabilität der Formulierung bei tieferen Temperaturen zu gewährleisten. Es genügen 10 bis 50 ml Lösungsmittel pro 1 Formulierung, d.h. 1 bis 5 Vol.%. Lösungsmittel.

Geeignete Alkylbenzole sind Xylole, Isopropylbenzol, 1,2,3,4-Tetramethylbenzol, Butylbenzole, Pentylbenzole. Auch Gemische dieser Lösungsmittel können verwendet werden.

Die folgenden Beispiele erläutern die Herstellung und zeigen die vorteilhaften Eigenschaften der erfindungsgemäßen Herbizide.

## Beispiel 1

a) 430 Gewichtsteile 1-Phenyl-4-amino-5-chlorpyridazon-(6), 100 Gewichtsteile Äthylenglykol, 60 Gewichtsteile des Natriumsalzes eines Kondensationsproduktes aus Phenolsulfonsäure, Harnstoff und Formaldehyd, 20 Gewichtsteile synthetische Kieselsäure und 30 Gewichtsteile eines Blockpolymerisates, bestehend aus einem Polypropylenoxidkern mit einem Molekulargewicht von ca. 3 250, auf den Äthylenoxid aufgepfropft wurde, bis ein Molekulargewicht von ca. 6 500 erreicht war, werden gemischt und mit Wasser auf 1 000 ml aufgefüllt.

Diese Mischung wird in einer Perlmühle so gemahlen, daß ca. 95 Gewichtsprozent der Teilchen kleiner als 2 μ sind.

Zu 767 ml dieses wäßrigen Suspensionskonzentrates, die 330 g 1-Phenyl-4-amino-5-chlor-pyridazon-(6) enthalten, werden 220 g N,N-Diisopropyl-thiolcarbaminsäure-2,3-dichlorallylester gegeben ; dann wird mit destilliertem Wasser auf 1 000 ml aufgefüllt. Durch intensives Rühren erhält man eine völlig homogene Mischung. Eine 2 %ige Lösung dieser Mischung weist nach mehr als 6 Stunden nur 0,08 ml Bodensatz auf, was zeigt, daß die Schwebefähigkeit des festen Pyridazons durch das flüssige Thiolcarbamat in keiner Weise beeinträchtigt wird.

Während der Lagerung des Konzentrats bei − 5 °C, Raumtemperatur, 30 °C, 40 °C und 50 °C über einen Zeitraum von 3 Monaten ändert sich die Stabilität nicht : Die Schwebefähigkeit der 2 %igen Lösung bleibt konstant gut, und eine Abtrennung des flüssigen Thiolcarbamats in der wäßrigen Dispersion tritt nicht ein.

b) Jeweils 6 l des unter a) beschriebenen wäßrigen Suspensionskonzentrates, das als Wirkstoff pro Liter 430 Gewichtsteile 1-Phenyl-4-amino-5-chlorpyridazon-(6) enthält, werden mit

50 l Wasser zu einer 10,7 %igen Spritzbrühe,
100 l Wasser zu einer 5,6 %igen Spritzbrühe,
200 l Wasser zu einer 2,9 %igen Spritzbrühe,
300 l Wasser zu einer 1,96 %igen Spritzbrühe,
400 l Wasser zu einer 1,47 %igen Spritzbrühe,
500 l Wasser zu einer 1,18 %igen Spritzbrühe,
600 l Wasser zu einer 0,99 %igen Spritzbrühe

verdünnt. Zu diesen wäßrigen Spritzbrühen werden unter Rühren jeweils 1,2 kg N,N-Diisopropyl-thiolcarbaminsäure-2,3-dichlorallylester zugegeben. Nach 3 bis 5 Minuten bildet sich in den Spritzbrühen ein starker öliger Bodensatz.

## Beispiel 2

a) 756 ml des wäßrigen Suspensionskonzentrats entsprechend Beispiel 1, die 325 g 1-Phenyl-4-amino-5-chlorpyridazon-(6) enthalten, 200 g N,N-Diisopropyl-thiolcarbaminsäure-2,3,3-trichlorallylester und 30,2 ml Xylol werden zusammengegeben und mit destilliertem Wasser auf 1 000 ml aufgefüllt. Durch Mischen unter intensivem Rühren erhält man eine Formulierung, die bei Temperaturen zwischen − 5 °C und + 50 °C stabil ist.

b) Jeweils 6 l des unter a) beschriebenen wäßrigen Suspensionskonzentrates, das pro Liter 430 Gewichtsteile 1-Phenyl-4-amino-5-chlorpyridazon-(6) enthält, werden mit

50 l Wasser zu einer 10,7 %igen Spritzbrühe,
100 l Wasser zu einer 5,6 %igen Spritzbrühe,
200 l Wasser zu einer 2,9 %igen Spritzbrühe,
300 l Wasser zu einer 1,96 %igen Spritzbrühe,
400 l Wasser zu einer 1,47 %igen Spritzbrühe,
500 l Wasser zu einer 1,18 %igen Spritzbrühe,
600 l Wasser zu einer 0,99 %igen Spritzbrühe

verdünnt. Zu diesen wäßrigen Spritzbrühen werden jeweils unter Rühren 1,55 kg N,N-Diisopropyl-thiolcarbaminsäure-2,3,3-trichlorallylester zusammen mit 234 ml Xylol zugegeben. Nach 3 bis 5 Minuten bildet sich in den Spritzbrühen ein starker öliger Bodensatz.

## Beispiel 3

a) Zu 672 ml des im Beispiel 1 beschriebenen wäßrigen Suspensionskonzentrats, die 289 g 1-Phenyl-4-amino-5-chlor-pyridazon-(6) enthalten, werden 333 g N-Äthyl-N-cyclohexyl-thiolcarbaminsäure-äthylester und destilliertes Wasser ad 1 000 ml gegeben. Die Komponenten werden dann durch intensives Rühren vermischt.

Man erhält eine stabile Formulierung, die sich in ihren Eigenschaften und ihrer Lagerstabilität wie das in Beispiel 1a) beschriebene Herbizid verhält.

b) Jeweils 6 l des unter a) beschriebenen wäßrigen Suspensionskonzentrates, das pro Liter 430 Gewichtsteile 1-Phenyl-4-amino-5-chlorpyridazon-(6) enthält, werden mit

50 l Wasser zu einer 10,7 %igen Spritzbrühe,
100 l Wasser zu einer 5,6 %igen Spritzbrühe,
200 l Wasser zu einer 2,9 %igen Spritzbrühe,
300 l Wasser zu einer 1,96 %igen Spritzbrühe,
400 l Wasser zu einer 1,47 %igen Spritzbrühe,
500 l Wasser zu einer 1,18 %igen Spritzbrühe,
600 l Wasser zu einer 0,99 %igen Spritzbrühe

verdünnt. Zu diesen wäßrigen Spritzbrühen werden unter Rühren jeweils 1,8 kg N-Äthyl-N-cyclohexyl-thiolcarbaminsäure-äthylester zugegeben. Nach 3 bis 5 Minuten zeigen die Spritzbrühen starken öligen Bodensatz.

## Beispiel 4

Zu 549 ml des im Beispiel 1 beschriebenen wäßrigen Suspensionskonzentrats, die 236 g 1-Phenyl-4-amino-5-chlorpyridazon-(6) enthalten, werden 364 g N-Äthyl-N-cyclohexyl-thiolcarbaminsäure-äthylester und destilliertes Wasser ad 1 000 ml gegeben. Die Komponenten werden dann durch intensives Rühren vermischt.

Man erhält eine stabile Formulierung, die sich in ihren Eigenschaften und ihrer Lagerstabilität wie das im Beispiel 1a) beschriebene Herbizid verhält.

## Beispiel 5

Zu 756 ml des im Beispiel 1 beschriebenen wäßrigen Suspensionskonzentrats, die 325 g 1-Phenyl-4-amino-5-chlorpyridazon-(6) enthalten, werden 187,5 g 2-Äthyl-6-methyl-N-äthyl-N-(1-methyl-2-methoxy-äthyl)-chloracetanilid und destilliertes Wasser ad 1 000 ml gegeben. Die Komponenten werden dann durch intensives Rühren vermischt.

Man erhält eine stabile Formulierung, die sich in ihren Eigenschaften und ihrer Lagerstabität wie das im Beispiel 1a) beschriebene Herbizid verhält.

## Beispiel 6

Zu 505 ml des im Beispiel 1 beschriebenen wäßrigen Suspensionskonzentrats, die 216 g 1-Phenyl-4-amino-5-chlor-pyridazon-(6) enthalten, werden 333 g 2-Äthyl-6-methyl-N-(1-methyl-2-methoxyäthyl)-chloracetanilid und destilliertes Wasser ad 1 000 ml gegeben. Die Komponenten werden dann durch intensives Rühren vermischt.

Man erhält eine stabile Formulierung, die sich in ihren Eigenschaften und ihrer Lagerstabilität wie das im Beispiel 1a) beschriebene Herbizid verhält.

## Beispiel 7

a) Zu 498 ml des im Beispiel 1 beschriebenen wäßrigen Suspensionskonzentrates, die 214 g 1-Phenyl-4-amino-5-chlor-pyridazon-(6) enthalten, werden 214 g 2,6-Dinitro-3,4-dimethyl-N-(1-äthyl-n-propyl)-anilin in 100 ml Xylol zugegeben und mit destillierten Wasser auf 1 000 ml aufgefüllt. Die Komponenten werden durch intensives Rühren vermischt. Man erhält eine stabile Formulierung, die sich in ihren Eigenschaften und ihrer Lagerstabilität wie das im Beispiel 1a) beschriebene Herbizid verhält.

b) Jeweils 6 l des unter a) beschriebenen wäßrigen Suspensionskonzentrates, das pro Liter 430 Gewichtsteile 1-Phenyl-4-amino-5-chlorpyridazon-(6) enthält, werden mit

50 l Wasser zu einer 10,7%igen Spritzbrühe,
100 l Wasser zu einer 5,6%igen Spritzbrühe,
200 l Wasser zu einer 2,9%igen Spritzbrühe,
300 l Wasser zu einer 1,96%igen Spritzbrühe,
400 l Wasser zu einer 1,47%igen Spritzbrühe,
500 l Wasser zu einer 1,18%igen Spritzbrühe,
600 l Wasser zu einer 0,99%igen Spritzbrühe,

verdünnt. Zu diesen wäßrigen Spritzbrühen werden unter Rühren jeweils 1,55 kg, 2,6-Dinitro-3,4-dimethyl-N-(1-äthyl-n-propyl)-anilin zusammen mit 724 ml Xylol zugegeben. Nach 3 bis 5 Minuten bilden sich in den Spritzbrühen ein starker körniger Bodensatz sowie Wirkstoffkristalle.

**Ansprüche**

1. Herbizid auf der Grundlage einer wäßrigen Suspension, enthaltend 20 bis 50 Gewichtsprozent 1-Phenyl-4-amino-5-chlor-pyridazon-(6) oder 1-Phenyl-4-amino-5-brompyridazon-(6), 2 bis 10 Gewichtsprozent Dispergiermittel, 0,5 bis 5 Gewichtsprozent Kieselsäure und 0,5 bis 5 Gewichtsprozent eines Blockpolymerisats aus Propylenglykol, Propylenoxid und Äthylenoxid, dadurch gekennzeichnet, daß es zusätzlich ein Thiolcarbamat der Formel I

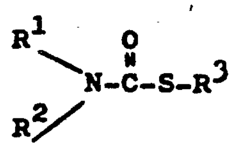

(I)

in der
$R^1$ einen Alkylrest mit bis zu 4 Kohlenstoffatomen,
$R^2$ einen Alkylrest mit bis zu 4 Kohlenstoffatomen oder den Cyclohexylrest und
$R^3$ einen Alkylrest mit bis zu 4 Kohlenstoffatomen, den 2,3-Dichlorallyl- oder den 2,3,3-Trichlorallylrest bedeuten, oder ein Chloracetanilid der Formel II

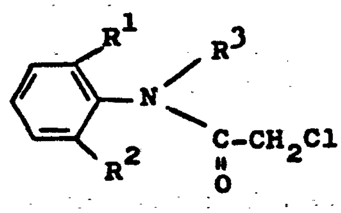

(II)

in der
$R^1$ und $R^2$ Methyl oder Äthyl und
$R^3$ einen Alkylrest mit bis zu 3 Kohlenstoffatomen oder einen Alkoxyalkylrest mit bis zu 4 Kohlenstoffatomen bedeuten, oder ein 2,6-Dinitroanilin der Formel III

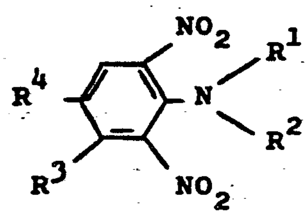

(III)

in der
$R^1$ Wasserstoff oder einen Alkylrest mit bis zu 5 Kohlenstoffatomen,
$R^2$ einen Alkylrest mit bis zu 5 Kohlenstoffatomen und
$R^3$ und $R^4$ einen gegebenenfalls durch Halogen substituierten Alkylrest mit bis zu 2 Kohlenstoffatomen bedeuten,
enthält, wobei das Gewichtsverhältnis Pyridazon : Thiolcarbamat, Chloracetanilid oder Dinitroanilin 4 : 1 bis 1 : 2 beträgt.

2. Herbizid nach Anspruch 1, dadurch gekennzeichnet, daß es zusätzlich ein Antifrostmittel enthält.

3. Herbizid nach Anspruch 1, dadurch gekennzeichnet, daß es ein unter Normalbedingungen festes Thiolcarbamat der Formel I oder ein Chloracetanilid der Formel II oder ein 2,6-Dinitroanilin der Formel III und zusätzlich 1 bis 5 Vol.% eines Alkylbenzols enthält.

4. Herbizid nach Anspruch 1, dadurch gekennzeichnet, daß es als Thiolcarbamat der Formel I N,N-Diisopropylthiolcarbaminsäure-2,3-dichlorallylester enthält.

5. Verfahren zur Herstellung eines Herbizids nach Anspruch 1, dadurch gekennzeichnet, daß man eine wäßrige Suspension, enthaltend 20 bis 50 Gew.% 1-Phenyl-4-amino-5-chlor-pyridazon-(6) oder 1-Phenyl-4-amino-5-brom-pyridazon-(6), 2 bis 10 Gew.% Dispergiermittel, 0,5 bis 5 Gew.%. Kieselsäure und 0,5 bis 5 Gew.% eines Blockpolymerisats aus Propylenglykol, Propylenoxid und Äthylenoxid, mit einem

Thiolcarbamat der Formel I oder einem Chloracetanilid der Formel II oder einem 2,6-Dinitroanilin der Formel III und gegebenenfalls Wasser, wobei das Gewichtsverhältnis Pyridazon : Thiolcarbamat, Chloracetanilid oder Dinitroanilin 4 : 1 bis 1 : 2 beträgt, vermischt.

**Claims**

1. A herbicide based on an aqueous suspension containing from 20 to 50 percent by weight of 1-phenyl-4-amino-5-chloro-pyridaz-6-one or 1-phenyl-4-amino-5-bromo-pyridaz-6-one, from 2 to 10 percent by weight of dispersant, from 0.5 to 5 percent by weight of silica and from 0.5 to 5 percent by weight of a block polymer of propylene glycol, propylene oxide and ethylene oxide, characterized in that it additionnally contains a thiolcarbamate of the formula I

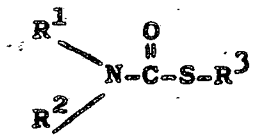

(I)

where
$R^1$ is alkyl of up to 4 carbon atoms,
$R^2$ is alkyl of up to 4 carbon atoms or cyclohexyl and
$R^3$ is alkyl of up to 4 carbon atoms, 2,3-dichloroallyl or 2,3,3-trichloroallyl,
or a chloroacetanilide of the formula II

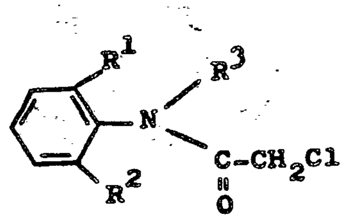

(II)

where
$R^1$ and $R^2$ are methyl or ethyl and
$R^3$ is alkyl of up to 3 carbon atoms or alkoxyalkyl of up to 4 carbon atoms, or a 2,6-dinitroaniline of the formula III

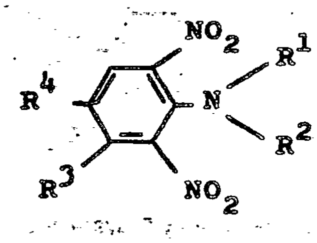

(III)

where
$R^1$ is hydrogen or alkyl of up to 5 carbon atoms,
$R^2$ is alkyl of up to 5 carbon atoms and
$R^3$ and $R^4$ are unsubstituted or halogen-substituted alkyl of up to 2 carbon atoms,
the weight ratio of pyridazone to thiolcarbamate, chloroacetanilide or dinitroaniline being from 4 : 1 to 1 : 2.

2. A herbicide as claimed in claim 1, characterized in that it additionally contains an antifreeze.

3. A herbicide as claimed in claim 1, characterized in that it contains a thiolcarbamate of the formula I which is solid under standard conditions (N.P.T.) or a chloroacetanilide of the formula II or a 2,6-dinitroaniline of the formula III and additionally contains from 1 to 5 % by volume of an alkylbenzene.

4. A herbicide as claimed in claims 1, characterized in that it contains 2,3-dichloroallyl N,N-diisopropylthiolcarbamate as thiolcarbamate of the formula I.

5. A process for the preparation of a herbicide as claimed in claim 1, characterized in that an aqueous suspension, containing from 20 to 50 % by weight of 1-phenyl-4-amino-5-chloro-pyridaz-6-one or 1-phenyl-4-amino-5-bromo-pyridaz-6-one, from 2 to 10 % by weight of a dispersant, from 0.5 to 5 % by weight of silica and from 0.5 to 5 % by weight of a block polymer of propylene glycol, propylene oxide and ethylene oxide, is mixed with a thiolcarbamate of the formula I or chloroacetanilide of the formula II or a

2,6-dinitroaniline of the formula III, with or without water, the weight ratio of pyridazone to thiolcarbamate, chloroacetanilide or dinitroaniline being from 4 : 1 to 1 : 2.

**Revendications**

1. Herbicide à base d'une suspension aqueuse contenant 20 à 50 % en poids de 1-phényl-4-amino-5-chloro-pyridazone-(6) ou 1-phényl-4-amino-5-bromo-pyridazone-(6), 2 à 10 % en poids de dispersant, 0,5 à 5 % en poids d'acide silicique et 0,5 à 5 % en poids d'un polymérisat en blocs de propylèneglycol, propylène oxyde et éthylène oxyde, caractérisé par le fait qu'il contient, en outre, un thiolcarbamate de formule I

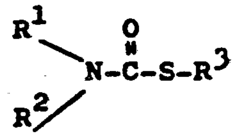

(I)

dans laquelle
$R^1$ représente un reste alkyle ayant jusqu'à 4 atomes de carbone
$R^2$ un reste alkyle ayant jusqu'à 4 atomes de carbone ou le reste cyclohexyle et
$R^3$ un reste alkyle ayant jusqu'à 4 atomes de carbone, le reste 2,3-dichloroallyle ou le reste 2,3,3-trichloroallyle, ou un chloracétanilide de formule II

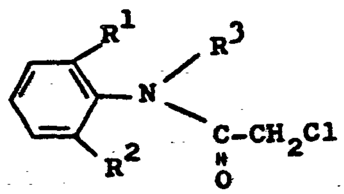

(II)

dans laquelle
$R^1$ et $R^2$ représentent méthyle ou éthyle et
$R^3$ un reste alkyle ayant jusqu'à 3 atomes de carbone ou un reste alcoxyalkyle ayant jusqu'à 4 atomes de carbone ou une 2,6-dinitroaniline de formule III

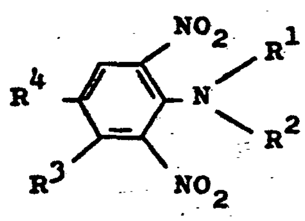

(III)

dans laquelle
$R^1$ représente l'hydrogène ou un reste alkyle ayant jusqu'à 5 atomes de carbone
$R^2$ un reste alkyle ayant jusqu'à 5 atomes de carbone et
$R^3$ et $R^4$ un reste alkyle ayant jusqu'à 2 atomes de carbone et éventuellement substitué par un halogène,
le rapport en poids pyridazone/thiolcarbamate chloracétanilide ou dinitroaniline valant de 4/1 à 1/2.

2. Herbicide selon la revendication 1, caractérisé par le fait qu'il contient en outre un agent anti-gel.

3. Herbicide selon la revendication 1, caractérisé par le fait qu'il contient un thiolcarbamate de formule I solide dans les conditions normales, ou un chloracétanilide de formule II ou une 2,6-dinitroaniline de formule III et en outre, 1 à 5 % en volume d'un alkylbenzène.

4. Herbicide selon la revendication 1, caractérisé par le fait qu'il contient, comme thiolcarbamate de formule I, du N,N-diisopropyl-thiolcarbamate de 2,3-dichlorallyle.

5. Procédé de préparation d'un herbicide selon la revendication 1, caractérisé par le fait qu'on mélange une suspension aqueuse, contenant 20 à 50 % en poids de 1-phényl-4-amino-5-chloro-pyridazone-(6) ou 1-phényl-4-amino-5-bromo-pyridazone-(6), 2 à 10 % en poids de dispersant, 0,5 à 5 % en poids d'acide silicique et 0,5 à 5 % en poids d'un polymérisat en blocs de propylèneglycol, propylène oxyde et éthylène oxyde avec un thiolcarbamate de formule I ou un chloroacétanilide de formule II ou une 2,6-dinitroaniline de formule III et éventuellement de l'eau, le rapport en poids pyridazone/thiolcarbamate chloracétanilide ou dinitroaniline valant de 4/1 à 1/2.